# EUROPEAN PATENT APPLICATION

(11) **EP 4 239 382 A1**
(43) Date of publication of application: **06.09.2023**
(21) Application number: 21886426.2
(22) Date of filing: 01.11.2021
(51) Int. Cl.: G02B 6/25, G02B 6/26

(54) **METHOD FOR CONSTRUCTING LIGHT TRANSMISSION SYSTEM, AND ON-SITE CONSTRUCTION SET**

(30) Priority: 02.11.2020 JP 2020183862
(71) Applicant: Nitto Denko Corporation, Ibaraki-shi Osaka 567-8680 (JP)
(72) Inventor: TSUDA, Koichi, Ibaraki-shi, Osaka 567-8680 (JP); SHIMIZU, Yusuke, Ibaraki-shi, Osaka 567-8680 (JP)
(74) Representative: Hoffmann Eitle
(86) International application number: PCT/JP2021/040201
(87) International publication number: WO 2022/092309

(57) **Abstract**

A method for constructing a plastic optical fiber (1) includes a first step of cutting the plastic optical fiber (1) at a construction site to form end faces (2, 3) of the plastic optical fiber (1); and a second step of connecting the end faces (2, 3) to wavelength multiplexing optical extenders (7, 8) without polishing the end faces (2, 3) at the same construction site.

## Description

### TECHNICAL FIELD

The present invention relates to a method for constructing an optical transmission system and an on-site construction set.

### BACKGROUND ART

There is a known construction method for connecting an optical fiber to a wavelength multiplexing optical extender (see, for example, Patent Document 1 below). The optical fiber described in Patent Document 1 is made of glass.

### Citation List

### Patent Document

Patent Document 1: U.S. Pat. No. 6,201,908

### SUMMARY OF THE INVENTION

### PROBLEM TO BE SOLVED BY THE INVENTION

The optical fiber is prepared in a long length and transferred to a construction site. Therefore, at the construction site, the optical fiber is cut into an appropriate length to form an end face thereof, and the end face thus formed is then connected to the wavelength multiplexing optical extender.

However, since the optical fiber is made of glass, the above-described end face becomes rough. Therefore, before the end face is connected to the wavelength multiplexing optical extender, it is necessary to polish the end face to a fine finish. That is, the end face needs to be smooth. For this reason, the construction method requires an additional step to make the end face smooth, which is complicated.

The present invention provides a method for constructing an optical transmission system and an on-site construction set that can achieve easy and simple construction.

### MEANS FOR SOLVING THE PROBLEM

The present invention (1) includes a method for constructing an optical transmission system, the method including a first step of cutting a plastic optical fiber to form an end face of the plastic optical fiber at a construction site; and a second step of connecting the end face to an optical extender without polishing the end face.

In the first step of this construction method, since the end face of the plastic optical fiber is formed by cutting the plastic optical fiber, the end face becomes smooth. Therefore, in the second step, the end face can be connected to the optical extender without being polished. As a result, this construction method is easy and simple.

The present invention (2) includes the method for constructing an optical transmission system described in (1), in which the optical extender is a wavelength multiplexing optical extender.

In this construction method, when the optical extender is a wavelength multiplexing optical extender, a less number of plastic optical fibers can transmit more video information.

The present invention (3) includes the method for constructing an optical transmission system described in (1) or (2), in which the first step and the second step are carried out at the same construction site.

In this construction method, in the second step, without being polished, the first end face is connected to the wavelength multiplexing optical extender at the same construction site as in the first step. Accordingly, this construction method is easy and simple.

The present invention (4) includes an on-site construction set for carrying out the method for constructing an optical transmission system as described in any one of (1) to (3), the on-site construction set including a connector into which a plastic optical fiber can be inserted; and an optical extender into which the connector can be inserted, the optical extender capable of being connected to an end face of the plastic optical fiber of which a portion exposed from an end face of the connector is cut.

In this on-site construction set, using the connector, the plastic optical fiber is cut to form the end face of the plastic optical fiber, so that the end face becomes smooth. Then, without being polished, the end face can be connected to the optical extender using the connector at the construction site. As a result, this on-site construction set can achieve easy and simple on-site construction.

### EFFECTS OF THE INVENTION

The method for constructing an optical transmission system according to the present invention is easy and simple.

The on-site construction set of the present invention can achieve easy and simple on-site construction.

### BRIEF DESCRIPTION OF THE DRAWINGS

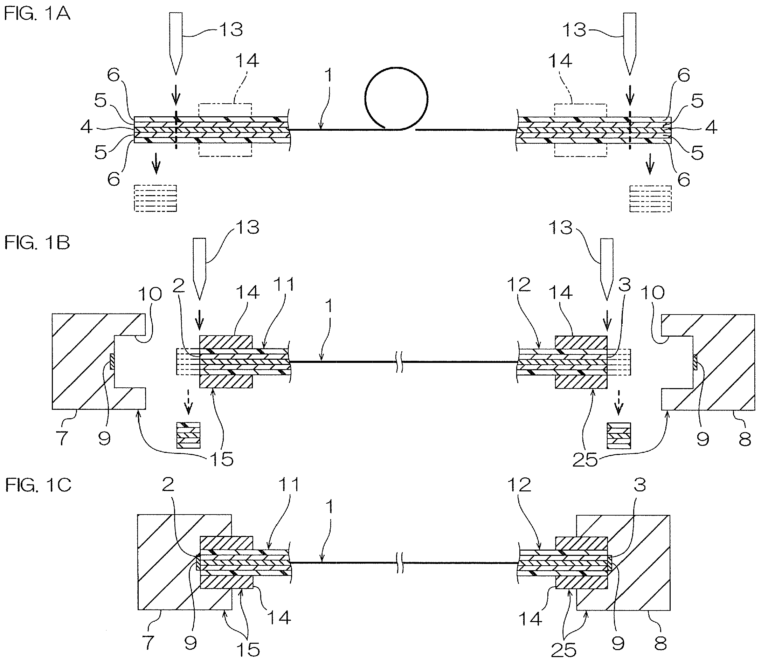

FIGS. 1A to 1C are process drawings illustrating an embodiment of a method for constructing an optical transmission system according to the present invention: FIG. 1A represents a step of preparing a plastic optical fiber; FIG. 1B represents a first step; and FIG. 1C represents a second step.

### DESCRIPTION OF THE EMBODIMENTS

One embodiment of the method for constructing an optical transmission system according to the present invention will be described with reference to FIGS. 1A to 1C.

This construction method includes a first step and a second step. The first step and the second step are sequentially carried out.

In the first step, first, as shown in FIG. 1A, a plastic optical fiber 1 is cut at a construction site. Then, as shown in FIG. 1B, a connector 14 is attached to each of ends 11, 12 of the plastic optical fiber 1, and the ends 11, 12 projecting from the connectors 14 are then cut.

The plastic optical fiber 1 has, for example, a long length. The plastic optical fiber 1 includes a core 4, a clad 5, and a coating layer 6. The core 4, the clad 5, and the coating layer 6 are disposed in order from the inside to the outside. The inside is a side approaching the central portion of the plastic optical fiber 1 in a direction perpendicular to the longitudinal direction. The outside is a side away from the central portion of the plastic optical fiber 1 in the above-described perpendicular direction. The material of the core 4 and the clad 5 is plastic, preferably, transparent plastic. Examples of the plastic include acrylic resin and epoxy resin. The core 4 has a higher refractive index than the clad 5. The material of the coating layer 6 is not particularly limited. The size of the plastic optical fiber 1 is not particularly limited. The mode of the plastic optical fiber 1 is not particularly limited. Examples of the mode include a multimode and a single mode. One or more plastic optical fibers 1 are used. Preferably, one plastic optical fiber 1 is used in view of workability.

A cutting method (first cutting) of the plastic optical fiber 1 is not particularly limited. Examples of the cutting method include a method using a blade 13. The plastic optical fiber 1 is cut so that the length of the cut plastic optical fiber 1 corresponds to a distance between two wavelength multiplexing optical extenders 7, 8 to be described later (see FIG. 1B).

The connector 14 has a through hole into which each of the ends 11, 12 of the plastic optical fiber 1 can be inserted. Each of the ends 11, 12 is inserted into the through hole of the connector 14, and end edge of the ends 11, 12 is projected from the connector 14. The connector 14 is attached to each of the ends 11, 12 of the plastic optical fiber 1. The plastic optical fiber 1 cannot be moved in the longitudinal direction relative to the connector 14.

Thereafter, the projecting portions of the ends 11, 12 are cut. This cutting (second cutting) is not particularly limited. For the second cutting, the same method as the first cutting is used, and for example, the method using the blade 13 is used.

Two end faces 2, 3 are formed by the cutting of the plastic optical fiber 1. The two end faces 2, 3 are cut surfaces of the plastic optical fiber 1. These end faces 2, 3 includes a first end face 2 and a second end face 3. The second end face 3 is an end face opposite to the first end face 2 in the longitudinal direction. The core 4 and the clad 5 are exposed at the first end face 2 and the second end face 3. The first end face 2 and the second end face 3 are smooth while a cut surface of a glass optical fiber is rough. The first end face 2 and the second end face 3 each have an arithmetic average roughness Ra of, for example, 1 µm or less, preferably 0.1 µm or less, more preferably 0.01 µm or less, and for example, 0.1 nm or more. The arithmetic average roughness Ra is measured in accordance with JIS B0601 (2013).

The two end faces 2, 3 are each flush with the front end face of the connector 14.

As shown in FIGS. 1B and 1C, in the second step, without being polished, the end faces 2, 3 are connected to the wavelength multiplexing optical extenders 7, 8, respectively, at the construction site. The wavelength multiplexing optical extenders 7, 8 include a first wavelength multiplexing optical extender 7 and a second wavelength multiplexing optical extender 8.

The first wavelength multiplexing optical extender 7 is an example of an optical extender. The first wavelength multiplexing optical extender 7 is disposed near an optical transmitting side device (not shown). Specifically, the first wavelength multiplexing optical extender 7 and the optical transmitting side device are disposed, for example, at the same construction site. The construction site where the first end face 2 is connected to the first wavelength multiplexing optical extender 7 in the second step is the same as the construction site where the first end face 2 is formed in the first step. Examples of the optical transmitting side device include a blue-ray disc player, a DVD player, a personal computer, and a video camera. The first wavelength multiplexing optical extender 7 together with the connector 14 constitutes a first on-site construction set 15. That is, the first on-site construction set 15 includes the first wavelength multiplexing optical extender 7 and the connector 14.

The second wavelength multiplexing optical extender 8 is an example of an optical extender. The second wavelength multiplexing optical extenders 8 is disposed, for example, remotely from the first wavelength multiplexing optical extender 7. The second wavelength multiplexing optical extender 8 is disposed near an optical receiving side device (not shown). The second wavelength multiplexing optical extender 8 and the optical receiving side device are disposed, for example, at the same construction site. The construction site where the second end face 3 is connected to the second wavelength multiplexing optical extender 8 in the second step is the same as the construction site where the second end face 3 is formed in the first step. Examples of the optical receiving side device include an image display device. Examples of the image display device include a digital signage (electronic signboard). The second wavelength multiplexing optical extender 8 together with the connector 14 constitutes a second on-site construction set 25. That is, the second on-site construction set 25 includes the second wavelength multiplexing optical extender 8 and the connector 14.

Examples of the wavelength multiplexing optical extenders 7, 8 include an SC connector. The wavelength multiplexing optical extenders 7, 8 each include, for example, an insertion slot 10 and a lens 9. The insertion slot 10 allows the ends 11, 12 of the plastic optical fiber 1 and the front end of the connector 14 to be inserted thereinto. The ends 11, 12 of the plastic optical fiber 1 include a first end 11 including the first end face 2 and a second end 12 including the second end face 3. The lens 9 faces the insertion slot 10.

In this second step, the first end 11 of the plastic optical fiber 1 and the connector 14 are inserted into the insertion slot 10 of the first wavelength multiplexing optical extender 7. The first end face 2 of the first end 11 is opposed to the lens 9 of the first wavelength multiplexing optical extender 7.

The second end 12 of the plastic optical fiber 1 and the front end of the connector 14 are inserted into the insertion slot 10 of the second wavelength multiplexing optical extender 8. The second end face 3 of the second end 12 is opposed to the lens 9 of the second wavelength multiplexing optical extender 8.

Thus, the plastic optical fiber 1 is optically connected to the wavelength multiplexing optical extenders 7, 8.

The first wavelength multiplexing optical extender 7 is connected to the optical transmitting side device before, during, or after the above-described connection with the plastic optical fiber 1. The second wavelength multiplexing optical extender 8 is connected to the optical receiving side device before, during, or after the above-described connection with the plastic optical fiber 1.

### <Operations and effects>

In the first step of the construction method, as shown in FIG. 1B, since the plastic optical fiber 1 is cut to form the first end face 2 of the plastic optical fiber 1, the first end face 2 becomes smooth. Therefore, in the second step, as shown in FIG.1C, the first end face 2 can be connected to the first wavelength multiplexing optical extender 7 without being polished. As a result, this construction method is easy and simple.

In this construction method, in the second step, without being polished, the first end face 2 is connected to the first wavelength multiplexing optical extender 7 at the same construction site as where the first end face 2 is formed. Further, without being polished, the second end face 3 is connected to the second wavelength multiplexing optical extender 8 at the same construction site as where the second end face 3 is formed. Accordingly, this construction method is easy and simple.

In the first step of the construction method, as shown in FIG. 1B, since the plastic optical fiber 1 is cut to form the second end face 3 of the plastic optical fiber 1, the second end face 3 becomes smooth. Therefore, in the second step, without being polished, the second end face 3 is connected to the second wavelength multiplexing optical extender 8 at the same construction site. As a result, this construction method is easy and simple.

In the first on-site construction set 15, using the connector 14, the plastic optical fiber 1 is cut to form the end face of the plastic optical fiber 1, so that the first end face 2 becomes smooth. Then, without being polished, the first end face 2 can be connected to the wavelength multiplexing optical extender 7 using the connector 14 at the construction site. As a result, this first on-site construction set 15 can achieve easy and simple on-site construction.

In the second on-site construction set 25, using the connector 14, the plastic optical fiber 1 is cut to form the end face of the plastic optical fiber 1, so that the second end face 3 becomes smooth. Then, without being polished, the second end face 3 can be connected to the wavelength multiplexing optical extender 8 using the connector 14 at the construction site. As a result, this second on-site construction set 25 can achieve easy and simple on-site construction.

### <Modified Examples>

In the following modified examples, the same reference numerals are provided for members and steps corresponding to each of those in one embodiment described above, and their detailed description is omitted. Further, the modified examples can achieve the same operations and effects as those of one embodiment unless otherwise specified. Furthermore, one embodiment and the modified examples thereof can be appropriately used in combination.

Though not shown, in the first step, only the first end 11 of the plastic optical fiber 1 is cut to form the first end face 2 alone, and in the second step, the first end face 2 may also be connected to the lens 9 of the first wavelength multiplexing optical extender 7.

The end faces 2, 3 of the plastic optical fiber 1 are allowed to have a slight deviation from the front end face of the connector 14. The deviation is, for example, 3 mm or less, preferably 1 mm or less.

The two wavelength multiplexing optical extenders 7, 8 are each an example of an optical extender. As the other example of the optical extender, for example, a single wavelength optical extender is used. Preferably, a wavelength multiplexing optical extender is used. When the optical extender is a wavelength multiplexing optical extender, a less number of plastic optical fibers 1 can transmit more video information.

The first step and the second step may be carried out at different construction sites. Specifically, in the second step, without being polished, the first end face 2 is connected to the first wavelength multiplexing optical extender 7 at a different construction site from where the first end face 2 is formed. Further, in the second step, without being polished, the second end face 3 is connected to the second wavelength multiplexing optical extender 8 at a different construction site from where the second end face 3 is formed. Preferably, the first step and the second step are carried out at different construction sites. Accordingly, this construction method is easy and simple.

While the illustrative embodiments of the present invention are provided in the above-described invention, such is for illustrative purpose only and it is not to be construed restrictively. Modification and variation of the present invention that will be obvious to those skilled in the art is to be covered by the following claims.

### Industrial Applicability

The on-site construction set is subjected to the method for constructing an optical transmission system.

### Description of Reference Numerals

- 1: plastic optical fiber
- 2: first end face
- 3: second end face
- 7: first wavelength multiplexing optical extender
- 8: second wavelength multiplexing optical extender
- 14: connector
- 15: first on-site construction set
- 25: second on-site construction set

## Claims

1. A method for constructing an optical transmission system, the method comprising:
a first step of cutting a plastic optical fiber to form an end face of the plastic optical fiber; and
a second step of connecting the end face to an optical extender without polishing the end face.

2. The method for an optical transmission system according to claim 1, wherein the optical extender is a wavelength multiplexing optical extender.

3. The method for an optical transmission system according to claim 1 or 2, wherein the first step and the second step are carried out at the same construction site.

4. An on-site construction set for carrying out the method for constructing an optical transmission system as defined in any one of claims 1 to 3,
the on-site construction set comprising:
a connector into which a plastic optical fiber can be inserted; and
an optical extender into which the connector can be inserted, the optical extender capable of being connected to an end face of the plastic optical fiber of which a portion exposed from an end face of the connector is cut.
